# EUROPEAN PATENT SPECIFICATION

(11) **EP 3 765 411 B1**
(45) Date of publication and mention of the grant of the patent: **07.06.2023**
(21) Application number: 19713376.2
(22) Date of filing: 13.03.2019
(51) Int. Cl.: C02F 11/00, C02F 11/12, C02F 11/06

(54) **AN IMPROVED DEWATERING METHOD AND APPARATUS**
VERBESSERTES ENTWÄSSERUNGSVERFAHREN UND VORRICHTUNG
PROCÉDÉ ET APPAREIL DE DÉSHYDRATATION AMÉLIORÉ

(30) Priority: 13.03.2018 GB 201804034
(43) Date of publication of application: 20.01.2021
(73) Proprietor: Natural Synergies Ltd, Middlesbrough TS4 2ED (GB)
(72) Inventor: SALAM, Tabarik Faisal, Sunderland Tyne and Wear SR5 3PE (GB); MELCHOR ROJAS, Maria Victoria, Sunderland Tyne and Wear SR5 3PE (GB)
(74) Representative: Harris, Oliver John Richard
(86) International application number: PCT/EP2019/056265
(87) International publication number: WO 2019/175229

(56) References cited:
- CN-A- 108 314 287
- US-A1- 2006 032 822
- ZHAO HE ET AL: "Enhancement of ultrasonic disintegration of sewage sludge by aeration", JOURNAL OF ENVIRONMENTAL SCIENCES, ELSEVIER BV, NL, vol. 42, 28 October 2015 (2015-10-28), pages 163-167, XP029512122, ISSN: 1001-0742, DOI: 10.1016/J.JES.2015.08.009
- MAHMOUD A ET AL: "Electrical field: A historical review of its application and contributions in wastewater sludge dewatering", WATER RESEARCH, ELSEVIER, AMSTERDAM, NL, vol. 44, no. 8, 1 April 2010 (2010-04-01), pages 2381-2407, XP026993902, ISSN: 0043-1354 [retrieved on 2010-02-06]

## Description

The present invention relates to sewage and wastewater treatment and in particular to an improved dewatering method and apparatus for treating sewage sludge.

Most existing dewatering systems (i.e. separating water from solid waste) are designed for large scale and high throughput wastewater treatment. Conventional systems are generally available as standalone units that can be integrated into industrial site processes. Many of these units have been in operation for decades and are purchased as off-the-shelf equipment. Generic dewatering equipment such as centrifuge, belt and plate filters, vacuum filtration are available for large scale applications, while thermal systems for drying sludge have been known in the prior art for a long time. Zhao He et al, "Enhancement of ultrasonic disintegration of sewage sludge by aeration", Journal of environmental Sciences, 2015, 42, p163-167 discloses a waste water treatment using aeration followed by application of acoustic energy.

Attempts have been made to scale down some of the existing units for use on smaller industrial sites. However, in most cases there is always a resulting decrease in processing energy efficiency. Large scale systems typically use between 6 to 98 kWh per tonne of sludge for dewatering, while it is found that the energy consumption per tonne increases as the system is scaled down. Recently, especially on the small to medium scale, some conventional dewatering systems have been adapted to use electrokinetic (EK) processes, which utilise the polar nature of water and particulate molecules to facilitate separation by inducing an electric field across the sewage sludge. Mahmoud A et al, "Electrical field: A historical review of its application and contributions in wastewater sludge dewatering", Water Research, 2010, 44, p2381-2407 discusses applying acoustic energy to sludge and subsequently applying an electric field. However, although dewatering systems based on EK processes have produced beneficial effects, the throughput and energy efficiency have not been particularly satisfactory. Hence, conventional EK systems do not have sufficient dewatering rates to enable them to be functional units for industrial applications.

It is therefore an object of the present invention to mitigate or overcome the above drawbacks and problems in the art and to provide a reliable and energy efficient method and apparatus for dewatering sewage sludge.

The claimed invention provides a dewatering method for treating sewage sludge, the method comprising:
(a) applying a plurality of ultrafine bubbles to a sludge to form an at least partially aerated sludge;
(b) applying acoustic energy to the aerated sludge to agitate at least a portion of the ultrafine bubbles;
   and
(c) applying an electric field to the aerated sludge to impart an electrophoretic mobility to the ultrafine bubbles to thereby facilitate separation and transport of water molecules from solid matter within the sludge,
wherein the ultrafine bubbles have an average diameter of up to 10µm.

In some embodiments, the applied acoustic energy to agitate the ultrafine bubbles produces a cavitation effect on the bubbles. The cavitation effect may create micro-convection to further facilitate the separation and transport of the water molecules from the solid matter within the sludge.

In some embodiments, the acoustic energy is applied in the form of ultrasound, optionally wherein the frequency of the ultrasound is varied during treatment. In some embodiments, the method further comprises generating ultrasound standing waves within the aerated sludge.

In some embodiments, the method further comprises repeating the step (a) of applying ultrafine bubbles to the sludge to increase the concentration of bubbles.

In some embodiments, the electric field is applied by an electrokinetic reactor and the method further comprises (d) applying a vacuum to the electrokinetic reactor.

In some embodiments, the method further comprises the step of collecting effluent water in a retaining tank.

In some embodiments, the method further comprises a step prior to step (a) of passing the sludge through a macerator to break up at least a portion of a solid matter in the sludge.

The claimed invention also provides a dewatering apparatus for treating sewage sludge in accordance with the method above, comprising:
an ultrafine bubble generator for generating and injecting a plurality of ultrafine bubbles having an average diameter of up to 10µM into a sludge;
an ultrasound generator for applying acoustic energy to the aerated sludge to agitate at least a portion of the ultrafine bubbles;
   and
an electrokinetic reactor for applying an electric field to the aerated sludge to impart an electrophoretic mobility to the ultrafine bubbles to thereby facilitate separation and transport of water molecules from solid matter within the sludge.

In some embodiments, the ultrasound generator is operable to vary the frequency of the ultrasound during treatment.

In some embodiments, the ultrasound generator is operable to generate standing waves within the aerated sludge.

In some embodiments, the electrokinetic reactor comprises at least one porous electrode for attracting water molecules.

In some embodiments, the electrokinetic reactor comprises at least one surface including zeolite, a carbonaceous material and a resin.

In some embodiments, the electrokinetic reactor comprises at least one jet injector for injecting a jet of air or additional ultrafine bubbles into the sludge to promote sludge mobility.

In some embodiments, the apparatus comprises an array of electrokinetic reactors.

The provision of a dewatering method comprising the application of ultrafine bubbles having an average diameter up to 10µm to a sludge together with the application of acoustic energy to agitate at least a portion of the ultrafine bubbles is found to be particularly advantageous as high dewatering rates can be achieved at relatively low energy input as compared to conventional sludge dewatering systems.

The claimed invention is intended to dewater sewage sludge by separating solid waste in particulate or floc (small, loosely aggregated mass of flocculent material suspended in or precipitated from a liquid) from the retaining water which includes free water, interstitial water held by physical and chemical forces within colloidal and particulate suspensions together with water retained within the internal cell walls. The method can be applied to all sludges that relate to and contain organic matter such as, but not limited to, sewage sludge treatment (e.g. raw, primary, SAS etc.), biomass slurries, COD/BOD (Chemical Oxygen Demand/Biochemical Oxygen Demand) wastewaters, digestate from anaerobic digestion plants, raw and prepared food processing and manufacturing waste waters, paper and pulp processing waste water, tanning, mineral, mining industrial waste waters, etc.

The claimed method utilises a number of techniques to perform the dewatering process.

As a pre-treatment step, the sewage sludge may be passed through a maceration unit or macerator to ensure that all relatively large extraneous materials or solids are broken up or crushed via comminution to a size at least <12 mm, and most preferably, <2 mm.

In an exemplary embodiment, the sludge is collected in a holding tank. The sludge is then subjected to the application of ultrafine bubbles (UFB) having an average diameter of up to 10µm, which are injected into, or otherwise permeated through, the volume of the sludge.

Generally, "ultrafine bubbles" or "UFB", means any bubbles that have a bubble diameter of less than about 50µm. UFB have certain characteristic properties. For example, unlike bubbles with diameters >50 microns, UFB are not strictly limited by Stokes' law and thus generally do not rise to the surface of the sludge.

Ultrafine bubbles may generally have a diameter of less than about 40µm, for example, less than 30µm, or less than 20µm. In the claimed embodiments, the ultrafine bubbles have a diameter of less than about 10µm. It may alternatively be said that the ultrafine bubbles generally have a diameter of up to about 50µm. Preferably the ultrafine bubbles may generally have a diameter of up to about 40µm, for example up to about 30µm, or up to about 20µm. It may alternatively be said that in the claimed embodiments, the ultrafine bubbles have a diameter of up to about 10µm.

When the generated ultrafine bubbles have a bubble diameter of less than 10µm, the UFBs may reduce in size. It is hypothesised that this is because the internal gas phase pressure of the bubble is positive relative to the pressure of the external liquid, causing dissolution of gas in the liquid phase. Because of this difference in phases, the UFBs are gravitationally stable and decrease in size to a nanometre scale. This enables a high concentration of UFBs to be maintained in the medium of the sludge, without loss of UFBs.

In some embodiments, the UFBs reduce in size to have a diameter of less than about 400nm. In particularly preferred embodiments, the UFBs reduce in size to have a diameter of less than about 300nm.

The reduction in diameter of the ultrafine bubbles affects the volume of the bubbles in that the surface area (A) of a volume of bubbles increases proportionally to the reduction in bubbles diameter (D). Ultrafine bubbles therefore have a higher surface area to volume ratio compared to larger bubbles.

Various methodologies and proprietary equipment are available to generate UFB in liquids and sludges. Some utilise mechanical liquid shearing using turbo mixers or other mechanical motive devices, while others generate UFB using compressed air injected through specially designed ceramics or metal grills.

The size of the UFBs and the size distribution may be varied depending on the method used to generate the UFBs. For example, where the UFBs are generated using compressed air injected through specially designed ceramics, the size of the UFBs and the size distribution may be varied by varying the pore size of the ceramic nozzle from which the bubble is generated.

If UFBs are being generated in clean water, it is possible to get up to 90% of the inlet gas volume converted to UFBs. However, in the claimed invention, UFBs are being generated in sewage sludge may therefore have a reduced conversion. The % conversion depends upon the % total solids. In some embodiments, the conversion is between about 20% and about 50%. Any conventional ultrafine bubble generator may be used in conjunction with the present invention, without sacrificing any of its benefits or advantages.

Therefore, as used herein, the term "aerated sludge" is intended to refer to a sludge that has been subjected to a dose of UFB having an average diameter of up to 10µm and in which a high concentration of the bubbles have been retained within the sludge.

It is to be appreciated that the step of applying UFB having an average diameter of up to 10µm to the sludge can preferably be repeated as many times as required, so that any degree of dosing or concentration of UFB can be built up in the sludge, depending on the particular treatment and processing requirements. In preferred embodiments, the effective dosing of UFB is >0.05% of the sludge volume, and preferably up to about 20% volume. In particularly preferred embodiments, the effective dosing of UFB is up to about 5% of the sludge volume. Although it is to be appreciated the percentage dosing is not limited to this range and may vary to suit the sludge being treated and/or the configuration of the apparatus etc.

After dosing the sludge with UFB having an average diameter of up to 10µm, the aerated sludge is subjected to the application of acoustic energy. In exemplary embodiments, the acoustic energy comprises ultrasound waves, with frequencies in the range of preferably about 10 kHz to about 50 MHz, and most preferably, about 16 kHz to about 20 kHz.

In preferred embodiments, the aerated sludge is pumped into an ultrasound flow reactor or similar vessel, which are available from proprietary suppliers. Any suitable ultrasound generator may be used in conjunction with the claimed invention. The function of the ultrasound generator is to agitate at least a portion of the UFB in the sludge to thereby produce cavitation and other secondary effects.

In the process of acoustic cavitation, the UFB expand and undergo radial motion as acoustic waves propagate through the sludge. The resulting bubbles can range in size from microns down to 4-300nm in diameter. When the UFB bubbles (i.e. "cavitation bubbles") are exposed to sinusoidal ultrasound waves, they naturally undergo contraction (negative) and expansion (positive) wave cycles. When the cavitation bubbles expand, more gas diffuses into them because of their larger surface area; while when the bubbles are compressed, less gas diffuses out because of the reduced surface area. With each cycle, the bubbles grow in size. Eventually, the bubbles reach a resonant size, whereupon at this point, there are two possible outcomes: either the bubble collapses violently (transient cavitation) or the bubble breaks apart gently and the bubble fragments are then exposed to the ultrasound waves triggering a new growth cycle (stable cavitation). UFB cavitation processes can cause physical and/or chemical effects, which may enhance thermochemical/biochemical reactions etc.

It is found in the claimed invention, that an unsymmetrical collapse of cavitation bubbles preferably produces micro-jets at high speed, which propagate toward the walls of the ultrasound flow reactor. The collapse of the bubbles also produces relatively strong shockwaves within the sludge, while the resulting impulsive movement of liquid toward or away from the collapsing bubbles leads to micro-convection. It is known that bubble collapse also leads to calculated localised adiabatic temperatures in excess of 5000K. This micro-convection preferably enhances the transport of liquid and solid particles within the sludge, which may also lead to forces that can cause emulsification or dispersion depending on the particular conditions within the ultrasound flow reactor. The emulsification or dispersion is caused by cavitation induced collapse at or near the interface leading to disruption and mixing, thereby resulting in the formation of very fine emulsions. Powerful mechanical disruption of phase boundaries within the liquid can occur caused by the cavitating bubbles.

The strong shockwaves and micro-jets generate significant shear forces that are able to scatter liquid within the sludge into tiny droplets and/or crush solid particles into finer material, such as powder (which remains in solution).

It is found that the degree of cell disruption/damage of the solid matter in the sludge is proportional to the number of bubble collapses with sufficient energy to overcome the minimum (activation energy) required for cell damage, and is related to collision frequency, number of bubbles and cell concentration per unit volume of sludge.

The addition of UFB having an average diameter of up to 10µm to the sludge prior to the ultrasonification greatly enhances the above effects. The solid matter is composed of dissolved organic solids, insoluble solids and biomass cell matter. Removing free water is relatively easy, but energy use and complexity increase when removing interstitial, colloidal and intercellular water. Therefore, the combined application of UFB dosing and ultrasound to the sludge breaks through the cell structure and enables the water bound up in the cells to be recovered as free water, without significantly increasing the energy input to the system.

Moreover, an additional advantage of the claimed method is that it also enhances the destruction, or otherwise weakens, the cell walls of any pathogens in the sludge - resulting in the waste solid and released effluent water being virtually pathogen free.

In preferred embodiments, the frequency of the ultrasound applied to the sludge is varied during the treatment in the ultrasound flow reactor. The varying of the frequency is found to maximise the impact of the sonification and further enhance the cavitation effect on the UFB, since it causes the bubbles to undergo enhanced agitation leading to a greater number of bubble collapses per unit volume of sludge. In exemplary embodiments, the frequency is varied from about 10 kHz to about 20 kHz, for example from about 12kHz to about 18kHz. Most preferably, the optimum frequency is centred on about 16 kHz. However, a wider range of frequencies may be used depending on the sludge being treated, and therefore other optimum frequencies may be higher or lower than about 16 kHz subject to the particular arrangement being used. For example, in some embodiments, the frequency is varied from about 16 kHz to about 20 kHz.

In another preferred embodiment, the ultrasound generator may comprise at least two transducers, each generating an acoustic wave of the same or different frequency but propagating in opposing directions.

In embodiments where at least two transducers each generate an acoustic wave of the same frequency, an ultrasound standing wave may be created in the sludge. In preferred embodiments the two transducers each generate an acoustic wave of a frequency between about 10kHz and about 20 kHz. In particularly preferred embodiments, the two transducers each generate an acoustic wave of a frequency of about 16 kHz.

The standing wave may enhance the cavitation and secondary effects on the UFB. The process of cavitation collapse is propagated through the sludge by the resonant expansion and contraction of the UFB. It is found that this process may be further enhanced when standing waves are established over the frequency range used, thereby utilising the nodes and anti-nodes of the standing waves to enhance dispersion and disruption of cell, floc and aggregated materials in the sludge. Of course, it is to be appreciated that any number of standing waves may be created within the ultrasound flow reactor at the same or different frequencies, depending on the particular conditions and/or sludge to be treated.

In some embodiments, it may be preferable not to generate a standing wave. For example, if particles are getting stuck at the nodes and anti-nodes of the standing waves. In these embodiments, it is preferable to use at least two transducers each generating an acoustic wave of different frequencies. In preferred embodiments one transducer generates an acoustic wave of a frequency between about 10kHz and about 20 kHz and the other transducer generates an acoustic wave of a different frequency between about 10kHz and about 20 kHz. For example, one transducer may generate an acoustic wave of a frequency of about 16 kHz and the other transducer may generate an acoustic wave of a frequency of about 18 kHz. In another example, one transducer may generate an acoustic wave of a frequency of about 19 kHz and the other transducer may generate an acoustic wave of a frequency of about 20 kHz.

In yet another embodiment, four transducers each generating an acoustic wave of a different frequency, for example, at frequencies of about 16 kHz, about 18 kHz, about 19 kHz and about 20 kHz.

The relative geometry of the transducers, which may comprise separate transducer plates, may be square, hexagonal, octagonal or any other suitable configuration depending on the setup of the treatment apparatus.

The process leads to a reduction in floc length and fractal particle dimension. By the term "floc length", we mean the average length of the small, loosely aggregated mass of flocculent material. By the term "fractal particle", we mean geometric particles of varying fractal dimension having Hausdorff-Besicovitch dimensions greater than their topological dimensions. The process preferably reduces the floc length/fractal particle dimension to less than 3.0 mm. For example, the process may reduce the floc length/fractal particle dimension to less than 2.95 mm. In particularly preferred embodiments, the process may reduce the floc length/fractal particle dimension to less than 2.8 mm.

In preferred embodiments, the sludge is then transferred to another vessel enabling an electric field to be applied to the sludge. Preferably, the vessel is in the form of an electrokinetic reactor (EKR). The construction of the EKR is described in more detail below in relation to the claimed apparatus. However, in summary, the EKR is most preferably constructed from inert and/or electrically conductive materials, such as sand, zeolite or other semi-conductive materials.

By the term "zeolite" we mean aluminosilicate minerals comprising sodium, potassium, calcium and barium. Examples of zeolites that could be used to construct the EKR include, but are not limited to gonnardite, natrolite, mesolite, paranatrolite, scolecite, tetranatrolite, edingtonite, kalborsite, thomsonite-series, analcime, leucite, pollucite, wairakite, laumontite, yugawaralite, goosecreekite, montesommaite, harmotome, phillipsite-series, amicite, gismondine, garronite, gobbinsite, boggsite, merlinoite, mazzite-series, paulingite-series, perlialite, chabazite-series, herschelite, willhendersonite, faujasite-series, linde type, maricopaite, mordenite, offretite, wenkite, bellbergite, bikitaite, erionite-series, ferrierite, gmelinite, levyne-series, darchiadite-series, epistilbite, clinoptilolite, heulandite-series, barrerite, stellerite, stilbite-series, brewsterite-series, cowlesite, pentasil, and tschernichite, or any combination of the above.

In one embodiment, the zeolite is a clinoptilolite. In a preferred embodiment, the zeolite is a hydrated sodium-potassium-calcium-aluminosilicate having a chemical formula of (Na_{0.5}K_{2.5})(Ca_{1.0}Mg_{0.5})(Al-₆Si₃₀)O₇₂·24H₂O.

In preferred embodiments, the walls of the EKR act as a porous cathode electrode. The effect of the porous cathode is that it can absorb water molecules that have stuck to the UFBs and been transported towards the cathode of the EKR. In some embodiments, the recovered effluent water from the cathode may be collected in a retaining tank or other suitable vessel.

The walls of the EKR preferably comprise zeolite and the conductivity of the walls may be further enhanced by the addition of one or more carbonaceous materials such as graphite particles, ultra pure graphite (UPG) or nuclear graphite (NG), graphite felt (GFe), carbon felt (CFe), graphite foil (GFo), carbon foil (CFo), flake graphite (FG) or ultra pure flake graphite (UP-FG), expanded graphite (EG) or expanded flake graphite (EFG), carbon black (CB), activated carbon black (ACB), carbon nanoplatelets (CN) or nanocarbon platelets (NCP), carbon nanotubes (CNT), and graphene (GR) etc.

Graphite is a crystalline form of the element carbon with its atoms arranged in a hexagonal structure. Graphite flakes or flake graphite may be isolated, flat, plate like particles which may have hexagonal edges if unbroken. Graphite felt is a rayon based material which may have a thickness of about 6mm to about 12mm. Carbon felt is a lower chemical purity alternative to graphite felt. Graphite foil is natural graphite flakes which have been processed into continuous foil by an acid. Carbon foil is a lower chemical purity alternative to graphite foil. Expanded graphite, or expanded flake graphite (EFG) is a synthesized intercalation compound of graphite that expands or exfoliates when heated. Carbon black is a form of paracrystalline carbon that has a high surface-area-to-volume ratio. Activated carbon black has a higher surface-area-to-volume ratio than carbon black. Carbon nanoplatelets, or nanocarbon platelets, consist of small stacks of graphene (for example 1-4 layers) that are 1-15 nanometres thick with diameters ranging from sub-micrometre to 100 micrometres. Carbon nanotubes are an allotrope of carbon taking the form of cylindrical carbon molecules. Graphene is an allotrope of carbon consisting of a single layer of carbon atoms arranged in a hexagonal lattice.

The carbonaceous material may comprise between about 1% and about 60% of the composition of the walls. For example, the carbonaceous material may comprise between about 5% and about 50% of the composition of the walls. In some embodiments, the carbonaceous material comprises up to about 20% of the composition of the walls. For example, the carbonaceous material may comprise up to about 15% of the composition of the walls. In particularly preferred embodiments, the carbonaceous material comprises up to about 10% of the composition of the walls.

The conductivity of the EKR walls may be further enhanced by the application of an additional fine layer of a mixture of a carbonaceous powder and zeolite or zeolite powder alone.

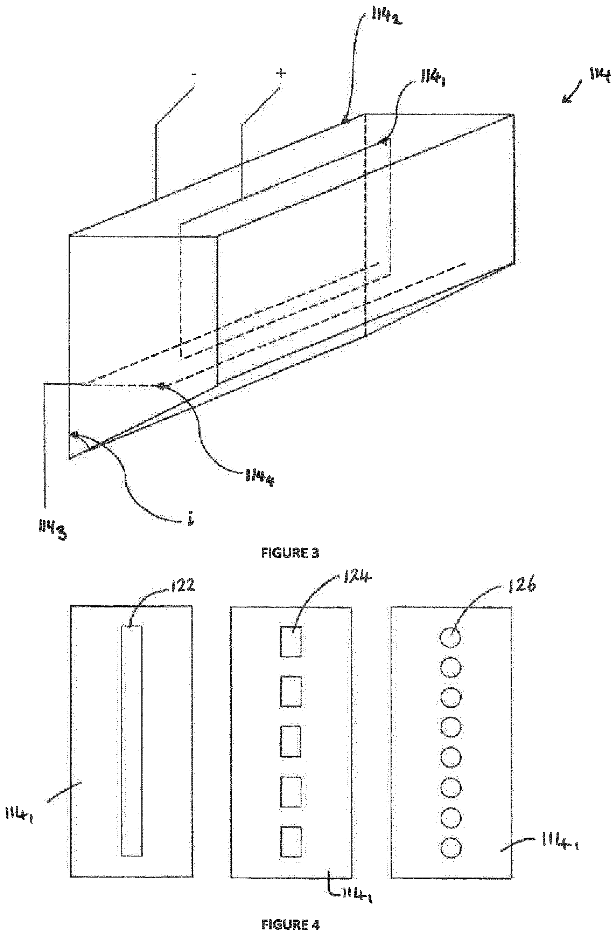

The anode of the EKR is most preferably disposed towards the centre of the reactor to ensure a symmetrical electric field within the EKR. However, additional anodes may be located at other specific locations within the EKR to create any desired electric field topography depending on the particular EKR geometry and/or the treatment conditions to be adopted for the sludge. Hence, it is to be appreciated that the geometry of the EKR and/or the number of anodes used (including their relative positions within the EKR) are not intended to be limiting. An example of a suitable geometry of the EKR is shown in Figure 3. With this geometry, an electric field topology is created within the EKR that promotes or otherwise gives rise to electro-osmosis and electrophoresis effects on the sludge being treated.

The anode may be fabricated from the same material as the cathode or may be made from carbon, metal or a metal composite.

When an electric voltage is applied to the EKR, the aerated sludge is then subjected to an electric field. Preferably, the applied voltage is in the range of between 5V-100V, and most preferably, in the range of 30V-70V. The action of the electric field on the UFB causes a negative electrophoretic mobility due a preferential adsorption of hydroxyl (OH⁻) ions, arising from the orientation of the water dipoles near the interphase with their positive poles directed towards the liquid in the sludge. This effect causes the water molecules in the sludge to effectively "stick" to the UFB, which essentially act as transport carriers (i.e. transport medium) for the water as they migrate towards the cathode of the EKR. In this way, water molecules are then dragged along with the bubbles towards the porous cathode, whereupon they are then absorbed by the cathode.

In addition, the UFB may also act as carriers for other particles (e.g. charged particles and dipole molecules etc.) and enable those particles to migrate through the sludge under the effect of the electric field. Moreover, the presence of the UFB having an average diameter of up to 10µM also advantageously reduces the effective viscosity of the sludge by providing porosity, thereby enhancing the transport of water molecules through the EKR to the cathode.

Any solid matter or solid particulates in the sludge are transported to the anode or anodes under a corresponding electrophoretic mobility. Therefore, applying an electric field to the aerated sludge facilitates separation and transport of water molecules from solid matter within the sludge.

In the claimed invention, there are two main electrokinetic phenomena operating to dewater the sludge, namely electro-osmosis and electrophoresis. As is known in the art, electro-osmosis is the motion of liquid induced by an applied potential across a porous material; while electrophoresis is the motion of dispersed particles relative to a fluid under the influence of a uniform electric field. Although water molecules possess an overall neutral charge, they are polar molecules. This means that they are attracted to cations (positively charged ions) in a solution and become oriented around these ions. If sludge is saturated with liquid containing ions in solution and an electric field is set up within the sludge, the positive ions tend to move towards the negative electrode (the cathode). As the ions move, the surrounding water molecules are effectively dragged along and hence water moves towards the cathode.

The electrode reactions can be summarised as follows:
At the Anode:

   2H₂O → O₂ + 4H⁺ (1)

   Mₐ → Mᵢⁿ⁺ + ne⁻ (2)
At the Cathode

   2H₂O + 2e⁻ → H₂ + 2OH⁻ (3)

   Mᵢⁿ⁺ + ne⁻ → Mᵢ (4)

   Mᵢⁿ⁺ + OH⁻ → Mᵢ (OH)ₙ (5)
where Mₐ represents the anode metal and Mᵢ is the dissolved cation species, i, in solution. Equation (1) states that the anode hydrolysis generates oxygen and reduces the solution pH value. As a result, a metallic anode will corrode, as shown in Equation (2). The solution pH will increase at the cathode and hydrogen will be generated, as shown in Equation (3). Cations are driven to the cathode by the electric field where they may reduce to element metals, as shown in Equation (4), or, more likely, form hydroxides, as shown in Equation (5). During the electrokinetic process, the movement of H⁺ and OH⁻ will change the sludge pH drastically. A pH gradient will be generated across the sludge as a result of the electrode reactions. The acid front at the anode will advance across the sludge suspensions toward the cathode by advection and diffusion effects. The net effect is the decrease of cathode pH in the later stage of treatment stabilising the pH of the sludge.

It is known that the surface of a bubble can adsorb alcohol molecules, ions and other impurities or particles in the immersed liquid. Equation (2) indicates that indicates that the cations will be attracted to the anode. The movement of charged particles is always opposite to the electro-osmotic flow of water. It is found that pH levels <3 around the cathode will typically make these cations insoluble. Therefore, solid particles will accumulate on the anode.

In preferred embodiments, the mobility of the UFB having an average diameter of up to 10µm under the action of the electric field may be further increased by subjecting the EKR to a vacuum of preferably about 300Pa-5kPa, and most preferably, about 500Pa-1.5KPa.

The dewatering rate may be further enhanced by the application of jet mixing within the EKR. Therefore, one or more jets or jet injectors may be provided in the EKR, and most preferably at the base, to allow a jet of air or additional UFB to be injected into the sludge to promote improved mobility. The jets prevent the occurrence of any initial sludge compaction or build up of a static layer of solid matter in the sludge, thereby assisting with sludge mobility and rapid dewatering rates.

The recovered effluent water from the cathode may be collected in a retaining tank or other suitable vessel. The solid waste may be mechanically removed from the EKR after treatment and both the effluent water and solid waste may be used for agricultural, livestock or similar purposes due to being virtually or completely pathogen free. Alternatively, the effluent water and solids may be further treated to meet specific environmental discharge levels and can be additionally processed for edible crop use and, in the case of the water, for drinking standards.

It is to be appreciated that the claimed method may be operated as a single one-off process or may be operated cyclically or continuously, depending on the particular site of operation, treatment conditions an/or sludge.

As outlined above, there is disclosed according to the invention, a dewatering apparatus for treating sewage sludge, comprising:
an ultrafine bubble generator for generating and injecting a plurality of ultrafine bubbles having an average diameter of up to 10µM into a sludge;
an ultrasound generator for applying acoustic energy to the aerated sludge to agitate at least a portion of the ultrafine bubbles;
   and
an electrokinetic reactor for applying an electric field to the aerated sludge to impart an electrophoretic mobility to the ultrafine bubbles to thereby facilitate separation and transport of water molecules from solid matter within the sludge.

The apparatus according to this disclosure intended to be used with the method described above, but is not intended to be solely limited by that use.

The apparatus comprises an ultrafine bubble generator for generating and injecting a plurality of ultrafine bubbles having an average diameter of up to 10µm.

Any conventional ultrafine bubble generator may be used in conjunction with the claimed invention, without sacrificing any of its benefits or advantages.

The apparatus comprises an ultrasound generator for applying acoustic energy to the aerated sludge to agitate at least a portion of the ultrafine bubbles. The ultrasound generator is preferably operable to vary the frequency of the ultrasound during treatment. Any suitable ultrasound generator may be used in conjunction with the claimed invention. The function of the ultrasound generator is to agitate at least a portion of the UFB in the sludge to thereby produce cavitation and other secondary effects, as described above in relation claimed method.

In preferred embodiments, the ultrasound generator is operable to generate standing waves within the aerated sludge.

The apparatus comprises an electrokinetic reactor (EKR) for applying an electric field to the aerated sludge. The EKR is preferably structurally and functionally the same as that described in relation to the claimed method. However, in addition, the EKR is preferably constructed as individual plates or panels (e.g. forming the walls) that are assembled into the specific EKR geometry for that particular application. In preferred embodiments, the EKR may adopt a cubic structure or rectangular form analogous to a long rectangular tank. Of course, it is to be understood that any suitable shape may be used in conjunction with the claimed invention.

The EKR is most preferably constructed from inert and/or electrically conductive materials, such as sand, zeolite or other semi-conductive materials. In preferred embodiments, the walls of the EKR act as a porous cathode electrode. The walls of the EKR preferably comprise zeolite and the conductivity of the walls may be further enhanced by the addition of one or more carbonaceous materials such as graphite particles, ultra pure graphite or nuclear graphite (NG), graphite felt, carbon felt, graphite foil, carbon foil, flake graphite or ultra pure flake graphite (UP-FG), expanded graphite or expanded flake graphite (EFG), carbon black, activated carbon black (ACB), carbon nanoplatelets or nanocarbon platelets (NCP), carbon nanotubes, and graphene etc. The carbonaceous material may comprise between about 1% and about 60% of the composition of the walls.

The conductivity of the EKR walls may be further enhanced by the application of an additional fine layer of a mixture of a carbonaceous powder and zeolite or zeolite powder alone.

The anode of the EKR is most preferably disposed towards the centre of the reactor to ensure a symmetrical electric field within the EKR. However, alternative and/or additional anodes may be located at other specific locations within the EKR to create any desired electric field topography depending on the particular EKR geometry and/or the treatment conditions to be adopted for the sludge.

Hence, it is to be appreciated that the geometry of the EKR and/or the number of anodes used (including their relative positions within the EKR) are not intended to be limiting. An example of a suitable geometry of the EKR is shown in Figure 3. With this geometry, an electric field topology is created within the EKR that promotes or otherwise gives rise to electro-osmosis and electrophoresis effects on the sludge being treated.

The anode may be fabricated from the same material as the cathode or may be made from carbon, metal or a metal composite.

The walls of the EKR are preferably cast and moulded into a required form using a particulate media of preferably a zeolite/carbonaceous mixture and a composition epoxy, or other non-corrosive resin/binder that will not dissolve or corrode in use. Examples of suitable resin/binders include, but are not limited to, carbon nanotube epoxy composite, conductive nanotube composite additives and two component epoxy based adhesives. Where the resin/binder is a two component epoxy based adhesive, one component may comprise bisphenol A-epichlorohydrin epoxy resin and the other component may comprise butanedioldiglycidyl ether. Such a resin/binder may be referred to herein as "Araldite^{®}".

The resin binder composition may range between about 10-50% by weight of the overall zeolite/carbonaceous mixture. The properties of this resin binder may be further enhanced by the addition of carbon based powders and/or particulates, as described above in relation to the cathode.

The EKR may be assembled by binding the edges of the walls using a conductive adhesive or the resin binder.

In preferred embodiments, the electrical supply to the EKR can be AC or DC, and may be continuous or pulsed at set intervals. Preferably the electrical supply to the EKR is DC. The electrical supply to the EKR walls is preferably connected to respective sides of the EKR. However, in other embodiments, this arrangement may be replaced with a single electrical connection comprising respective cathode and anode connections.

The applied voltage is preferably in the range of between 5V-100V AC/DC, and most preferably, between 30V-70V AC/DC. Of course, it is to be appreciated that the particular voltage range will depend on factors such as the EKR geometry and/or the sludge to be treated.

In preferred embodiments, the mobility of the UFB under the action of the electric field may be further increased by subjecting the EKR to a vacuum of preferably about 300Pa-5kPa, and most preferably, about 500Pa-1.5KPa.

In preferred embodiments, the EKR comprises at least one jet injector to promote sludge mobility. Therefore, one or more jets or jet injectors may be provided in the EKR, and most preferably at the base, to allow a jet of air or additional UFB to be injected into the sludge to promote improved mobility. The jets prevent the occurrence of any initial sludge compaction or build up of a static layer of solid matter in the sludge, thereby assisting with sludge mobility and rapid dewatering rates.

It should be understood that the claimed apparatus is inherently scalable and as such the apparatus may comprise a single EKR, or alternatively, the apparatus may comprise an array of electrokinetic reactors, depending on the particular installation and required treatment conditions. Any suitable configuration for the array may be used in conjunction with the claimed invention, without sacrificing any of its benefits or advantages.

Embodiments of the claimed invention will now be described in detail by way of example and with reference to the accompanying drawings in which:
**Figure 1** - shows a schematic of a dewatering method;
**Figures 2a & 2b** - shows graphical representations of CST (Capillary Suction Time) profiles in accordance with the application of UFB and US at 16 kHz and 20 kHz, respectively;
**Figure 3** - shows a schematic of an example EKR reactor;
**Figure 4** - shows a plan view of example anode configurations for use with the EKR reactor;
**Figures 5a-5c** - show respective example transducer plate geometries for use within an EKR reactor;
**Figure 6** - shows a graphical representation of the relationship between EKR applied voltage and the percentage of the total solids at 105 °C (%TS).

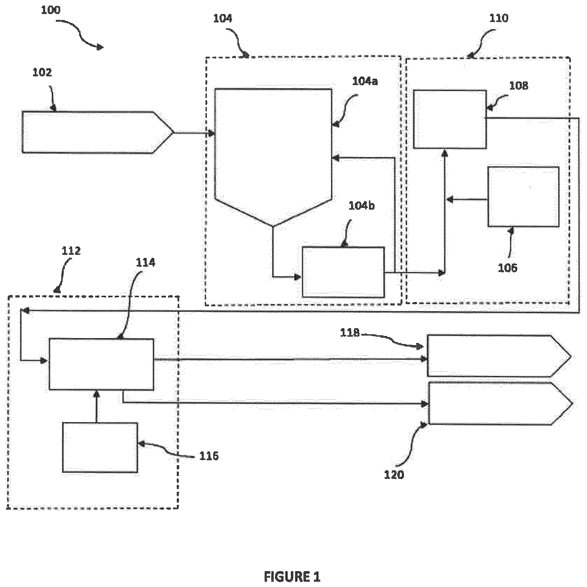

Referring to Figure 1, there is a shown a dewatering method 100 for treating sewage sludge.

As an initial pre-treatment step, the sewage sludge 102, in this case a primary sludge, is passed through a maceration unit 104 to ensure that all relatively large extraneous materials or solids are broken up or crushed via comminution to a size at least <12 mm, and ideally <2 mm. The maceration unit 104 comprises a pre-treatment tank 104a and a maceration pump 104b.

The sludge is then subjected to the application of ultrafine bubbles (UFB), having an average diameter of up to 10µm, which are injected into the sludge via an ultrafine bubble generator 106. The step of applying UFB to the sludge can be repeated as many times as required, so that any degree of concentration of UFB can be built up in the sludge, depending on the particular treatment and processing requirements.

After dosing the sludge with UFB, the "aerated sludge" is pumped into an ultrasound flow reactor 108, whereupon the sludge is subjected to the application of ultrasound waves. The ultrasound waves are applied with frequencies in the range of about 10 kHz to about 50 MHz.

As shown in Figure 1, the ultrasound flow reactor 108 may be integrated into a single unit 110 together with the ultrafine bubble generator 106. However, in other arrangements, the ultrasound flow reactor may be separate to the ultrafine bubble generator depending on the particular installation and treatment conditions.

The function of the ultrasound is to agitate at least a portion of the UFB in the sludge to thereby produce cavitation and other secondary effects. In the process of cavitation, the UFB grow, expand and undergo radial motion as acoustic energy propagates through the sludge. The resulting bubbles range in size from microns down to 4-300nm in diameter, and are found to be generally stable. During stable cavitation, the radii of the UFB undergo radial oscillation by periodically expanding and shrinking within several acoustic cycles. However, when the bubbles reach their resonant size, at least some will undergo transient cavitation and others will break apart gently, whereby the resulting fragments will start a new cycle of stable cavitation. The collapse of the bubbles produces physical and/or chemical effects. These effects can enhance thermochemical/biochemical reactions etc. according to one or more of the following mechanisms:
Cavitating bubbles are sufficient to cause rupture of the O-H bond itself. This is because the collapse of the cavitation bubbles is also near adiabatic and generates temperatures of thousands of degrees within the bubbles for a short period of time. Under these temperature conditions, highly reactive radicals are generated. In water, H and OH radicals are generated by the homolysis of water. This results in the formation of radical species and the production of oxygen gas and hydrogen peroxide

H₂O → H⁺ + OH⁻

OH⁻ + OH⁻ → H₂O₂

OH⁻ + OH⁻ → H₂O + O

OH⁻ + OH⁻ → H₂ + O₂

H⁺ + O₂ → HO₂⁻

HO₂⁻ + H⁺ → H₂O₂

HO₂ + HO₂ → H₂O₂ + O₂

OH⁻ + H₂O → H₂O₂ + H⁺

H⁺ + H⁺ → H₂

H⁺ + OH⁻ → H₂O

In the presence of a metal ion present, an alternative mechanism may be

M²⁺ + H⁺ → M⁺ + H⁺

H⁺ + O₂ → HO₂⁻

M²⁺ + HO₂⁻ → M⁺ + H⁺ + O₂

OH⁻ + H₂O₂ → HO₂⁻ + H₂O

OH⁻ + OH⁻ → H₂O₂

HO₂⁻ + HO₂ → H₂O₂ + O₂

These resulting free radicals may then participate in chemical reactions within the sludge. The formation of hydroxyl radicals during sonification, enhances the negative electrophoretic movement of the UFB towards the cathode.

It has been found that an unsymmetrical collapse of bubbles typically produces micro-jets at high speed, which propagate toward the walls of the ultrasound flow reactor 108. The collapse of the bubbles also produces relatively strong shockwaves within the sludge, while the resulting impulsive movement of liquid toward or away from the collapsing bubbles leads to micro-convection. This micro-convention enhances the transport of liquid and solid particles within the sludge, which may also lead to forces that can cause emulsification or dispersion depending on the particular conditions within the ultrasound flow reactor.

The strong shockwaves and micro-jets generate significant shear forces that are able to scatter liquid within the sludge into tiny droplets and/or crush solid particles into finer material, such as powder (which remains in solution).

It is found that the degree of cell disruption/damage of the solid matter in the sludge is proportional to the number of bubble collapses with sufficient energy to overcome the minimum (activation energy) required for cell damage, and is related to collision frequency, number of bubbles and cell concentration per unit volume of sludge.

The addition of UFB having an average diameter of up to 10µm to the sludge prior to the ultrasonication greatly enhances the above effects. The solid matter is composed of dissolved organic solids, insoluble solids and biomass cell matter. Removing free water is relatively easy, but energy use and complexity increase when removing interstitial, colloidal and intercellular water. Therefore, the combined application of UFB dosing and ultrasound to the sludge breaks through the cell structure and enables the water bound up in the cells to be recovered as free water, without significantly increasing the energy input to the system.

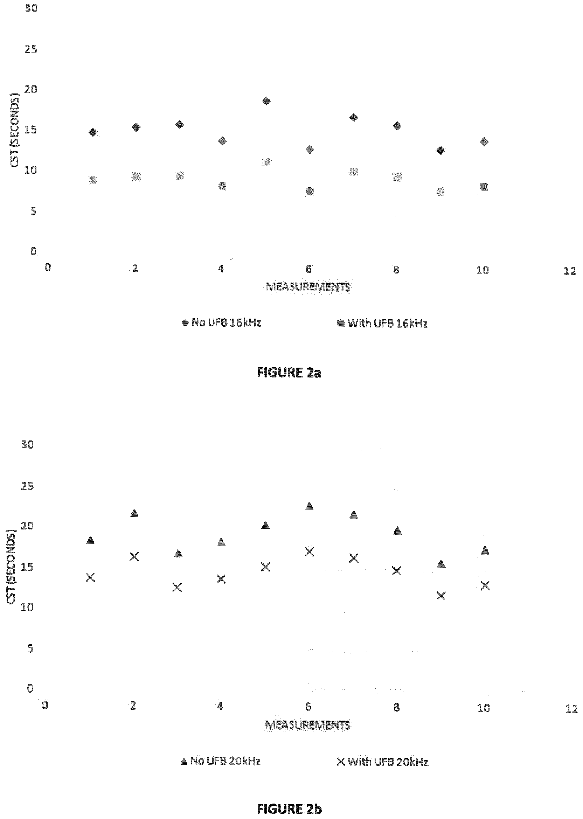

Referring now to Figures 2a & 2b, there are shown graphical representations of CST (Capillary Suction Time) profiles in accordance with the application of UFB and ultrasound at the respective frequencies of 16 kHz and 20 kHz. The graphs clearly show the effect of the ultrasound on the sludge at 16kHz (with and without UFB dosing) and 20 kHz (with and without UFB dosing) respectively, using the CST as a direct measure of the dewaterability of the sludge, while also being a measure of the specific resistance to filtration (SRF) of wastewater sludges and of sludges in general. CST is a standard technique in the industry and is used by wastewater operators to assess dewatering efficiency. The time measured by a CST apparatus is dependant on viscosity, temperature, sludge particle size, floc size, percentage of total solids (%TS) and particle bound water content.

The cavitation effect on the UFB via the application of ultrasound leads to a reduction in sludge particle size, together with a breakup of flocculated particles and a reduction in floc and particle fractal dimension. Due to the resulting rupturing of the particle, bound up water is released into the sludge medium. This effect leads to a reduction in sludge viscosity, which thereby reduces the measured CST. The impact of increasing the dosage of UFB within the sludge media causes an increase in global cavitation activity, which in turn promotes greater sludge disintegration. As a result, the measured CST is further reduced and consequently the CST value provides a direct indictor of the effectiveness of the dewaterability of the sludge.

As shown in Figure 2a, the combined effect of the ultrasound and the UFB dosing leads to lower CST values as compared to the ultrasound alone (i.e. in the absence of any UFB). Therefore, it is clear that the combined effect produces a higher dewatering efficiency than conventional ultrasound alone. Likewise, in Figure 2b, the same effect is evident, but at a higher ultrasound frequency of 20 kHz, which when compared to Figure 2a indicates that for this particular test sludge and apparatus, is slightly less efficient than the combined effect at 16 kHz. The reason for this difference is that when the UFB collapse, as a result of transient cavitation, this creates high pressures and temperatures exceeding 5000K. These conditions produce a shock wave, or a high-speed jet, capable of destroying cellular structure (cell lysis), which thereby releases cell water. By contrast, stable cavitation produces large cyclic pulsations at resonance that can cause large shear forces in the region around the bubble, leading to cell disruption or dislodgement of the cell within the floc to release interstitial water. For a set wave amplitude and energy input, the power density will be lower at 16kHz than at 20kHz, and therefore it is found that a lower power density promotes conditions more suited for stable cavitation as opposed to transient cavitation, although both processes will operate together. However, in any particular setup, the best mode of operation will be to favour stable cavitation, while not excluding transient cavitation.

Moreover, an additional advantage of the claimed method is that it also enhances the destruction, or otherwise weakens, the cell walls of any pathogens in the sludge - resulting in the waste solid and released effluent water being virtually pathogen free.

The frequency of the ultrasound applied to the sludge is varied during the treatment in the ultrasound flow reactor 108. The varying of the frequency is found to maximise the impact of the sonification and further enhance the cavitation effect on the UFB, since it causes the bubbles to undergo enhanced agitation leading to a greater number of bubble collapses per unit volume of sludge.

Although not shown in Figure 1, the ultrasound flow reactor 108 may include an ultrasound generator that comprises at least two transducers, each generating an acoustic wave of the same frequency but propagating in opposing directions. As a result, an ultrasound standing wave may be created in the sludge, which is found to yet further enhance the cavitation and secondary effects on the UFB.

Alternatively, the ultrasound flow reactor 108 may include an ultrasound generator that comprises at least two transducers, each generating an acoustic wave of a different frequency.

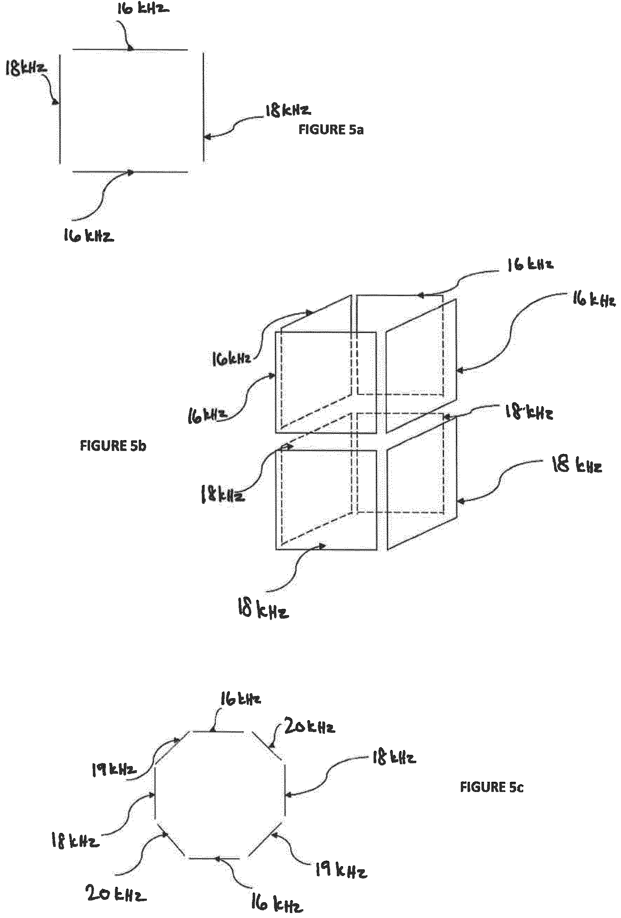

As an example, there is shown in each of Figures 5a-5c, a specific geometry of transducer plates for use with the claimed invention. In Figure 5a, there are four plates arranged in a square (or cube in 3-dimensions), with opposing pairs being driven at respective ultrasound frequencies of 16 kHz and 18 kHz. In Figure 5b, there is shown a modified form of the cube arrangement, in which two cubic geometries of plates are stacked, with the top plates being driven at ultrasound frequency of 16 kHz and the bottom plates at 18 kHz. While in Figure 5c, an octagonal arrangement of plates is adopted, with respective opposing pairs being driven at frequencies of 16 kHz, 18 kHz, 19 kHz and 20 kHz.

The sludge is then transferred to another unit 112 comprising an electrokinetic reactor (EKR) 114, which enables an electric field to be applied to the sludge. As shown in Figure 3, an example EKR 114 is constructed as individual plates or panels (e.g. forming the walls) that are assembled into the specific EKR geometry for that particular application. The EKR 114 can adopt the form of a long rectangular tank, with an angled bottom face (at inclination angle i), as shown in Figure 3. The anode 114₁ is located generally towards the centre of the tank, while the cathode/filter media 114₂ forms the outer walls of the tank. A voltage is applied between the anode 114₁ and the cathode 114₂ (as shown in Figure 3). UFB are injected into the tank through conduit 114₃ from the ultrafine bubble generator 106 into a mixing means 114₄.Of course, any suitable shape may be used in conjunction with the claimed invention.

The EKR 114 is constructed from inert and/or electrically conductive materials, such as sand, zeolite or other semi-conductive materials, while the walls of the EKR act as a porous cathode electrode.

The walls of the EKR 114 are cast and moulded into a required form using a particulate media of a zeolite/carbonaceous mixture and a composition epoxy, or other non-corrosive resin/binder that will not dissolve or corrode in use. The resin binder composition may range between about 10-50% by weight of the overall zeolite/carbonaceous mixture. The properties of this resin binder can be further enhanced by the addition of carbon based powders and/or particulates, such as graphite particles, expanded graphite, carbon black, carbon nanoplatelets and graphene etc.

The conductivity of the EKR walls can be further enhanced by the application of an additional fine layer of a mixture of a carbonaceous powder and zeolite or zeolite powder alone or by the addition of a carbonaceous material such as graphite particles, expanded graphite, carbon black, carbon nanoplatelets and graphene etc. The carbonaceous material may comprise between about 1%-60% of the composition of the walls.

The anode may be fabricated from the same material as the cathode or may be made from carbon, (sacrificial) metal or a metal composite. The anode can have any suitable shape or configuration depending on the geometry of the EKR etc. As shown in Figure 4, the anode 114₁ may be generally rectangular in form with a central longitudinal aperture 122 running the length of the anode, or may comprise separate rectangular 124 or circular 126 spaced apertures along its length instead.

Examples of possible compositions for the material of the EKR 114 are presented in Table 1 below. This list is intended to be illustrative and not exhaustive. The type of zeolite used in the claimed apparatus is a Clinoptilolite. However, it is to be understood that other types of materials may alternatively be used.

For ease of reference, the following acronyms are used in Table 1:
d_{pavg} - Average particle diameter
N/A - Not applicable
NCP - Nanocarbon platelets
NG-92 - Nuclear graphite (ultrapure flake graphite)
EFG - Expanded flake graphite
ACB - Activated carbon Black
FG-92 - Flake graphite
UP-FG - Ultrapure flake graphite
CNT - Carbon nanotube

To fabricate the EKR cathode and anode, the constituent particulates are mixed with 10-15% of an adhesive binder and left to set for a period of time that can range from a minimum of 3-25 minutes. The mixed material is cast in a mould and allowed to set. This technique allows for any shape or geometry of EKR 114 to be created. If the cathode and/or the anode are cast as individual walls/plates, then the EKR 114 can be assembled by binding the edges of the walls using a conductive adhesive or the resin binder. The conductivity of the EKR walls may be further enhanced by the application of an additional fine layer of a mixture of a carbonaceous powder and zeolite or zeolite powder alone.

**Table 1.**

| **Material** | **Carbon** | **Resin** |
|---|---|---|
| Sand (d_{pavg} 180µm) | N/A | Araldite^{®} |
| Zeolite (d_{pavg} 100µm) | N/A | Araldite^{®} |
| Zeolite (d_{pavg} 980µm) | N/A | Araldite^{®} |
| Zeolite (d_{pavg} 980µm/ d_{Pavg} 100µm) | N/A | Araldite^{®} |
| Zeolite (d_{pavg} 980µm) | 1% NCP | Araldite^{®} |
| Zeolite (d_{pavg} 980µm) | 3% NCP | Araldite^{®} |
| Zeolite (d_{pavg} 980µm) | 5% NCP | Araldite^{®} |
| Zeolite (d_{pavg} 980µm) | 3% NG-92 | Araldite^{®} |
| Zeolite (d_{pavg} 980µm) | 5% NG-92 | Araldite^{®} |
| Zeolite (d_{pavg} 980µm) | 9% NG-92 | Araldite^{®} |
| Zeolite (d_{pavg} 980µm) | 14% NG-92 | Araldite^{®} |
| Zeolite (d_{pavg} 980µm) | 9% NG-92/3%NCP | Araldite^{®} |
| Zeolite (d_{pavg} 980µm) | 9% NG-92/5%NCP | Araldite^{®} |
| Zeolite (d_{pavg} 980µm) | 9% NG-92/3%EFG | Araldite^{®} |
| Zeolite (d_{pavg} 980µm) | 9% NG-92/5% EFG | Araldite^{®} |
| Zeolite (d_{pavg} 980µm) | 5% ACB | Araldite^{®} |
| Zeolite (d_{pavg} 980µm) | 9%FG-92/5% ACB | Araldite^{®} |
| Zeolite (d_{pavg} 980µm) | 14% UP-FG | Araldite^{®} |
| Zeolite (d_{pavg} 980µm) | 9% UP-FG/5% EFG | Araldite^{®} |
| Zeolite (d_{pavg} 980µm) | 9% UP-FG/5% NCP | Araldite^{®} |
| Zeolite (d_{pavg} 980µm) | 14% UP-FG/3% NCP/5% EFG | Araldite^{®} |
| Zeolite (d_{pavg} 980µm) | 14% UP-FG | CNT/Epoxy |
| Zeolite (d_{pavg} 980µm) | 14% FG-92 | CNT/Epoxy |
| Zeolite (d_{pavg} 980µm) | 11.5% FG-92/2.5% EFG | CNT/Epoxy |
| Zeolite (d_{pavg} 980µm) | 14% FG-92/3% EFG | Araldite^{®} |
| Zeolite(d_{pavg} 980µm) | 14% FG-92/5% EFG | Araldite^{®} |

The anode of the EKR 114 is located towards the centre of the reactor to ensure a symmetrical electric field within the EKR. However, alternative and/or additional anodes can be located at other specific locations within the EKR to create any desired electric field topography depending on the particular EKR geometry and/or the treatment conditions to be adopted for the sludge.

Hence, it is to be appreciated that the geometry of the EKR and/or the number of anodes used (including their relative positions within the EKR) are not intended to be limiting. An example of a suitable geometry of the EKR is shown in Figure 3. With this geometry, an electric field topology is created within the EKR that promotes or otherwise gives rise to electro-osmosis and electrophoresis effects on the sludge being treated.

The electrical supply to the EKR 114 can be AC or DC, and can be continuous or pulsed at set intervals. Preferably the electrical supply to the EKR is DC. The electrical supply to the EKR walls is generally connected to respective sides of the EKR 114. However, in other arrangements this can be replaced with a single cathode/anode electrical connection. The applied voltage is in the range of between 5V-100V AC/DC, and typically between 30V-70V. Of course, it is to be appreciated that the particular voltage range will depend on factors such as the EKR geometry and/or the sludge to be treated.

When an electric voltage is applied to the EKR 114, the aerated sludge is then subjected to an electric field. The action of the electric field on the UFB causes a negative electrophoretic mobility due a preferential adsorption of hydroxyl (OH⁻) ions, arising from the orientation of the water dipoles near the interphase with their positive poles directed towards the liquid in the sludge. This effect causes the water molecules in the sludge to effectively "stick" to the UFB, which essentially act as transport carriers (i.e. transport medium) for the water as they migrate towards the cathode of the EKR 114. In this way, water molecules are then dragged along with the bubbles towards the porous cathode, whereupon they are then absorbed by the cathode.

In addition, the UFB may also act as carriers for other particles (e.g. charged particles and dipole molecules etc.) and enable those particles to migrate through the sludge under the effect of the electric field. Moreover, the presence of the UFB also advantageously reduces the effective viscosity of the sludge by providing porosity, there enhancing the transport of water molecules through the EKR 114 to the cathode.

Any solid matter or solid particulates in the sludge are transported to the anode or anodes under a corresponding electrophoretic mobility. Therefore, applying an electric field to the aerated sludge facilitates separation and transport of water molecules from solid matter within the sludge.

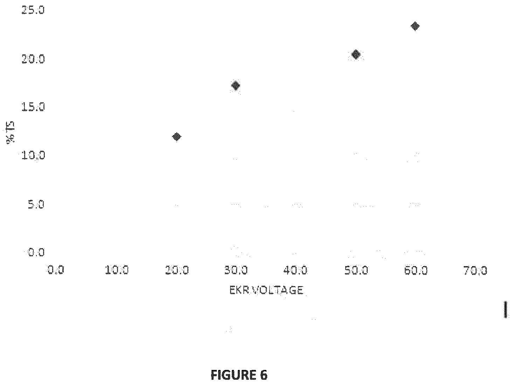

Referring now to Figure 6, it is shown that the percentage total solids at 105 °C (%TS) is found to be positively related to the EKR applied voltage. Therefore, it is evident that the efficiency of the dewatering process increases as the electrophoretic effect becomes stronger in the sludge, such that more water is transported and recovered from the sludge (and hence a greater percentage total solids remain) as the voltage increases.

It is found that there is a limit to enhancing the electrophoretic effect with increasing voltage due, for example, to steric effects and changes to the zeta potential (arising from the pH gradient within the EKR). In an example setup, the optimum dewatering voltage was found to be around 50V DC. However, the range of effective voltages that could be applied was between 15V and 80V, but could be between 10V and 100V, depending on the particular sludge/wastewater being treated.

The effect of the combined UFB and ultrasonication of the sludge according to the claimed invention can be seen in Table 2 below for two test ultrasound frequencies of 16 kHz and 20 kHz.

**Table 2.**

| | **16 kHz** | **16 kHz + UFB** | **20 kHz** | **20 kHz + UFB** |
|---|---|---|---|---|
| %TS | 23.5 | 34.8 | 22.7 | 32.0 |
| Power (kWh/m3) | 23.0 | 17.8 | 29.3 | 22.8 |

Hence, it is clear that the application of the UFB to the sludge not only increases the percentage total solids remaining, and thus recovered water, but it also leads to significantly lower energy input (i.e. power consumption) as compared to the absence of UFB in the sludge. Therefore, the combination of UFB and ultrasonication according to the claimed invention provides a method and apparatus, which gives increased dewatering rates and lower power requirements than conventional dewatering systems.

The mobility of the UFB under the action of the electric field is found to be further increased by subjecting the EKR 114 to a vacuum of about 300Pa-5kPa, and typically about 500Pa-1.5KPa.

Although not shown in Figure 1, the EKR 114 comprises at least one jet injector to promote sludge mobility. Therefore, one or more jets or jet injectors can be provided in the base of the EKR 114, to allow a jet of air or additional UFB to be injected into the sludge to promote improved mobility. The jets prevent the occurrence of any initial sludge compaction or build up of a static layer of solid matter in the sludge, thereby assisting with sludge mobility and rapid dewatering rates.

The recovered effluent water 118 from the cathode may be collected in a retaining tank or other suitable vessel (not shown). The solid waste 120 may be mechanically removed from the EKR 114 after treatment and both the effluent water 118 and solid waste 120 can be used for agricultural, livestock or similar purposes due to being virtually or completely pathogen free. Indeed, the dewatered sludge can be used as a valuable fertiliser or as a feedstock to a combustion system. The dewatered sludge is virtually or completely pathogen free, while the claimed invention may also be applied to sanitation purposes. The effluent water may be processed to drinking water standards.

Of course, it is to be understood that the method and apparatus of the claimed invention are inherently scalable, and therefore the apparatus, and in turn, the electrokinetic reactor, can be sized to treat a sludge or slurry according to any particular requirement depending on the desired use and/or implementation. Hence, none of the embodiments or examples disclosed herein are to be taken to be limiting on the size of the apparatus.

Indeed, a typical laboratory EKR as used herein can be scaled up to a full-scale plant reactor by utilising the ratio of the internal laboratory EKR volume to the full scale EKR dewatering unit. In one example, the ratio of this scale-up can be 244 (i.e. numerical multiplying factor), but in other arrangements can range between 30 and 300. The scale up between laboratory EKR and full-scale plant reactor may also be based on surface area ratio between the laboratory EKR and full-scale reactor. In one example, the ratio of this scale-up is 39.06, but in other arrangements can range between 10 and 50.

## Claims

1. A dewatering method for treating sewage sludge (102), the method comprising:
(a) applying a plurality of ultrafine bubbles to a sludge (102) to form an at least partially aerated sludge;
(b) applying acoustic energy to the aerated sludge to agitate at least a portion of the ultrafine bubbles; and
(c) applying an electric field to the aerated sludge to impart an electrophoretic mobility to the ultrafine bubbles to thereby facilitate separation and transport of water molecules from solid matter within the sludge,
wherein the ultrafine bubbles have an average diameter up to 10µm.

2. The method of Claim 1, wherein the applied acoustic energy to agitate the ultrafine bubbles produces a cavitation effect on the bubbles.

3. The method of Claim 2, wherein the cavitation effect creates micro-convection to further facilitate the separation and transport of the water molecules from the solid matter within the sludge.

4. The method of any preceding claim, wherein the acoustic energy is applied in the form of ultrasound, optionally wherein the frequency of the ultrasound is varied during treatment.

5. The method of Claim 4, further comprising generating ultrasound standing waves within the aerated sludge.

6. The method of any preceding claim, further comprising repeating the step (a) of applying ultrafine bubbles to the sludge to increase the concentration of bubbles.

7. The method of any preceding claim,
(i) wherein the electric field is applied by an electrokinetic reactor (114) and the method further comprises (d) applying a vacuum to the electrokinetic reactor (114); and/or
(ii) further comprising the step of collecting effluent water (118) in a retaining tank; and/or
(iii) further comprising a step prior to step (a) of passing the sludge through a macerator (104) to break up at least a portion of a solid matter in the sludge.

8. A dewatering apparatus for treating sewage sludge in accordance with the method of any one of claims 1 to 7, comprising:
an ultrafine bubble generator (106) for generating and injecting a plurality of ultrafine bubbles having an average diameter of up to 10µm into a sludge;
an ultrasound generator for applying acoustic energy to the aerated sludge to agitate at least a portion of the ultrafine bubbles;
and
an electrokinetic reactor (114) for applying an electric field to the aerated sludge to impart an electrophoretic mobility to the ultrafine bubbles to thereby facilitate separation and transport of water molecules from solid matter within the sludge.

9. The dewatering apparatus of Claim 8, wherein the ultrasound generator is operable to vary the frequency of the ultrasound during treatment.

10. The dewatering apparatus of Claim 8 or Claim 9, wherein the ultrasound generator is operable to generate standing waves within the aerated sludge.

11. The dewatering apparatus of any one of Claims 8 to 10, wherein the electrokinetic reactor (114) comprises at least one porous electrode for attracting water molecules.

12. The dewatering apparatus of any one of claims 8 to 11, wherein the electrokinetic reactor (114) comprises at least one surface including zeolite, a carbonaceous material and a resin.

13. The dewatering apparatus of any of Claims 8 to 12, wherein the electrokinetic reactor (114) comprises at least one jet injector for injecting a jet of air or additional ultrafine bubbles into the sludge to promote sludge mobility.

14. The dewatering apparatus of any of Claims 8 to 13, wherein the apparatus comprises an array of electrokinetic reactors.

## Patentansprüche

1. Entwässerungsverfahren zur Aufbereitung von Klärschlamm (102), wobei das Verfahren umfasst:
(a) Anwenden von mehreren ultrafeinen Blasen auf einen Schlamm (102), um einen zumindest zum Teil durchlüfteten Schlamm zu bilden;
(b) Anwenden von Schallenergie auf den durchlüfteten Schlamm, um mindestens einen Teil der ultrafeinen Blasen zu bewegen;
und
(c) Anwenden eines elektrischen Felds auf den durchlüfteten Schlamm, um den ultrafeinen Blasen eine elektrophoretische Mobilität zu verleihen, um dadurch eine Trennung und einen Transport von Wassermolekülen von einem Feststoff innerhalb des Schlamms zu erleichtern,
wobei die ultrafeinen Blasen einen durchschnittlichen Durchmesser von bis zu 10 pm aufweisen.

2. Verfahren nach Anspruch 1, wobei die angewendete Schallenergie zum Bewegen der ultrafeinen Blasen einen Kavitationseffekt auf die Blasen hervorruft.

3. Verfahren nach Anspruch 2, wobei der Kavitationseffekt eine Mikrokonvektion erzeugt, um die Trennung und den Transport der Wassermoleküle von dem Feststoff innerhalb des Schlamms weiter zu erleichtern.

4. Verfahren nach einem der vorhergehenden Ansprüche, wobei die Schallenergie in der Form von Ultraschall angewendet wird, optional wobei die Frequenz des Ultraschalls während der Aufbereitung variiert wird,

5. Verfahren nach Anspruch 4, ferner umfassend ein Erzeugen von Ultraschallstehwellen innerhalb des durchlüfteten Schlamms.

6. Verfahren nach einem der vorhergehenden Ansprüche, ferner umfassend ein Wiederholen des Schritts (a) des Anwendens von ultrafeinen Blasen auf den Schlamm, um die Konzentration von Blasen zu erhöhen.

7. Verfahren nach einem der vorhergehenden Ansprüche,
(i) wobei das elektrische Feld durch einen elektrokinetischen Reaktor (114) angewendet wird und das Verfahren ferner (d) ein Anlegen eines Vakuums auf den elektrokinetischen Reaktor (114) umfasst; und/oder
(ii) ferner umfassend den Schritt eines Sammelns von Abwasser (118) in einem Rückhaltetank; und/oder
(iii) ferner umfassend einen Schritt eines Leitens des Schlamms durch einen Zerkleinerer (104) vor Schritt (a), um zumindest einen Teil eines Feststoffs in dem Schlamm aufzubrechen.

8. Entwässerungsvorrichtung zur Aufbereitung von Klärschlamm gemäß dem Verfahren nach einem der Ansprüche 1 bis 7, umfassend:
einen Generator (106) für ultrafeine Blasen, um mehrere ultrafeine Blasen mit einem durchschnittlichen Durchmesser von bis zu 10 pm zu erzeugen und in einen Schlamm einzublasen;
einen Ultraschallgenerator zum Anwenden von Schallenergie auf den durchlüfteten Schlamm, um mindestens einen Teil der ultrafeinen Blasen zu bewegen;
und
einen elektrokinetischen Reaktor (114) zum Anwenden eines elektrischen Felds auf den durchlüfteten Schlamm, um den ultrafeinen Blasen eine elektrophoretische Mobilität zu verleihen, um dadurch eine Trennung und einen Transport von Wassermolekülen von einem Feststoff innerhalb des Schlamms zu erleichtern.

9. Entwässerungsvorrichtung nach Anspruch 8, wobei der Ultraschallgenerator dazu betreibbar ist, die Frequenz des Ultraschalls während der Aufbereitung zu variieren.

10. Entwässerungsvorrichtung nach Anspruch 8 oder Anspruch 9, wobei der Ultraschallgenerator dazu betreibbar ist, Stehwellen innerhalb des durchlüfteten Schlamms zu erzeugen.

11. Entwässerungsvorrichtung nach einem der Ansprüche 8 bis 10, wobei der elektrokinetische Reaktor (114) mindestens eine poröse Elektrode zum Anziehen von Wassermolekülen umfasst,

12. Entwässerungsvorrichtung nach einem der Ansprüche 8 bis 11, wobei der elektrokinetische Reaktor (114) mindestens eine Oberfläche umfasst, die Zeolith, ein kohlenstoffhaltiges Material und ein Harz beinhaltet.

13. Entwässerungsvorrichtung nach einem der Ansprüche 8 bis 12, wobei der elektrokinetische Reaktor (114) mindestens einen Strahlinjektor zum Einblasen eines Luftstrahls oder von zusätzlichen ultrafeinen Blasen in den Schlamm umfasst, um eine Schlammmobilität zu fördern.

14. Entwässerungsvorrichtung nach einem der Ansprüche 8 bis 13, wobei die Vorrichtung ein Array von elektrokinetischen Reaktoren umfasst,

## Revendications

1. Procédé de déshydratation pour traiter une boue d'épuration (102), le procédé comprenant
(a) l'application d'une pluralité de bulles ultrafines à une boue (102) pour former une boue au moins partiellement aérée ;
(b) l'application d'énergie acoustique à la boue aérée pour agiter au moins une partie des bulles ultrafines ; et
(c) l'application d'un champ électrique à la boue aérée pour conférer une mobilité électrophorétique aux bulles ultrafines pour ainsi faciliter la séparation et le transport de molécules d'eau à partir des matières solides contenues dans la boue,
dans lequel les bulles ultrafines ont un diamètre moyen allant jusqu'à 10 pm.

2. Procédé selon la revendication 1, dans lequel l'énergie acoustique appliquée pour agiter les bulles ultrafines produit un effet de cavitation sur les bulles.

3. Procédé selon la revendication 2, dans lequel l'effet de cavitation crée une micro-convection pour faciliter davantage la séparation et le transport des molécules d'eau à partir des matières solides contenues dans la boue.

4. Procédé selon l'une quelconque des revendications précédentes, dans lequel l'énergie acoustique est appliquée sous la forme d'ultrasons, éventuellement dans lequel la fréquence des ultrasons varie durant le traitement.

5. Procédé selon la revendication 4, comprenant en outre la génération d'ondes stationnaires ultrasonores à l'intérieur de la boue aérée.

6. Procédé selon l'une quelconque des revendications précédentes, comprenant en outre la répétition de l'étape (a) comprenant l'application de bulles ultrafines à la boue pour augmenter la concentration des bulles.

7. Procédé selon l'une quelconque des revendications précédentes,
(i) dans lequel le champ électrique est appliqué par un réacteur électrocinétique (114), et le procédé comprend en outre (d) l'application d'un vide au réacteur électrocinétique (114) et/ou
(ii) comprenant en outre l'étape de collecte d'eau d'effluent (118) dans un réservoir de retenue ; et/ou
(iii) comprenant en outre une étape, avant l'étape (a), de passage de la boue dans un macérateur (104) pour dissocier au moins une partie des matières solides dans la boue.

8. Dispositif de déshydratation pour traiter une boue d'épuration conformément au procédé de l'une quelconque des revendications 1 à 7, comprenant :
un générateur de bulles ultrafines (106) pour générer et injecter une pluralité de bulles ultrafines ayant un diamètre moyen allant jusqu'à 10 um dans une boue ;
un générateur d'ultrasons pour appliquer une énergie acoustique à la boue aérée pour agiter au moins une partie des bulles ultrafines ; et
un réacteur électrocinétique (114) pour appliquer un champ électrique à la boue aérée pour conférer une mobilité électrophorétique aux bulles ultrafines pour ainsi faciliter la séparation et le transport de molécules d'eau à partir des matières solides contenues dans la boue.

9. Dispositif de déshydratation selon la revendication 8, dans lequel le générateur d'ultrasons peut fonctionner de manière à faire varier la fréquence des ultrasons durant le traitement.

10. Dispositif de déshydratation selon la revendication 8 ou la revendication 9, dans lequel le générateur d'ultrasons peut fonctionner de manière à générer des ondes stationnaires à l'intérieur de la boue aérée.

11. Dispositif de déshydratation selon l'une quelconque des revendications 8 à 10, dans lequel le réacteur électrocinétique (114) comprend au moins une électrode poreuse pour attirer les molécules d'eau.

12. Dispositif de déshydratation selon l'une quelconque des revendications 8 à 11, dans lequel le réacteur électrocinétique (114) comprend au moins une surface contenant une zéolite, un matériau carboné et une résine.

13. Dispositif de déshydratation selon l'une quelconque des revendications 8 à 12, dans lequel le réacteur électrocinétique (114) comprend au moins un injecteur à jet pour injecter un jet d'air ou des bulles ultrafines additionnelles dans la boue pour favoriser la mobilité de la boue.

14. Dispositif de déshydratation selon l'une quelconque des revendications 8 à 13, lequel dispositif comprend un réseau de réacteurs électrocinétiques.
